# EUROPEAN PATENT APPLICATION

(11) **EP 4 293 759 A1**
(43) Date of publication of application: **20.12.2023**
(21) Application number: 22752780.1
(22) Date of filing: 09.02.2022
(51) Int. Cl.: H01M 4/86, H01M 8/10, H01M 8/1004

(54) **MEMBRANE ELECTRODE ASSEMBLY AND SOLID-POLYMER FUEL CELL**

(30) Priority: 12.02.2021 JP 2021021119
(71) Applicant: TOPPAN INC., Tokyo 110-0016 (JP)
(72) Inventor: KISHI Katsuyuki, Tokyo 110-0016 (JP)
(74) Representative: Hoffmann Eitle
(86) International application number: PCT/JP2022/005132
(87) International publication number: WO 2022/172958

(57) **Abstract**

A membrane electrode assembly includes: a polymer electrolyte membrane; a first electrocatalyst layer and a second electrocatalyst layer sandwiching the polymer electrolyte membrane while being in contact therewith; a fuel electrode diffusion layer which is a gas diffusion layer laminated on the first electrocatalyst layer to form a fuel electrode; and an air electrode diffusion layer which is a gas diffusion layer laminated on the second electrocatalyst layer to form an air electrode. The air electrode diffusion layer has a Gurley value of 80 seconds or less in a thickness direction thereof, which is smaller than a Gurley value of the fuel electrode diffusion layer in a thickness direction thereof, the Gurley value indicating air permeability.

## Description

### [Technical Field]

The present disclosure relates to membrane electrode assemblies and polymer electrolyte fuel cells.

### [Background Art]

Fuel cells have been attracting attention as batteries contributing to solving environmental issues or energy issues. Fuel cells generate electric power using a chemical reaction between a fuel such as hydrogen and an oxidant such as oxygen. Of the fuel cells, polymer electrolyte fuel cells, which can operate at low temperatures and can be reduced in size, are expected to be used as portable power supplies, household power supplies, on-vehicle power supplies, and the like.

Such a polymer electrolyte fuel cell includes a membrane electrode assembly including a fuel electrode serving as an anode, an air electrode serving as a cathode, and a polymer electrolyte membrane sandwiched between the fuel electrode and the air electrode. The fuel electrode and the air electrode each include a laminate of an electrocatalyst layer and a gas diffusion layer. A fuel gas containing hydrogen is supplied to the fuel electrode, and an oxidant gas containing oxygen is supplied to the air electrode. Accordingly, an electrode reaction expressed by the following Formula 1 and Formula 2 occurs in the fuel electrode and the air electrode, and electrical power is generated.

Fuel electrode: H₂ → 2H⁺ + 2e⁻ ... Formula 1

Air electrode: 1/2 O₂ + 2H⁺ + 2e⁻ → H₂O ... Formula 2

Specifically, as shown by Formula 1, protons and electrons are generated from the fuel gas supplied to the fuel electrode, due to the action of the catalyst contained in the electrocatalyst layer. Protons are conducted by a polymer electrolyte contained in the electrocatalyst layer and the polymer electrolyte membrane, and migrate to the air electrode via the polymer electrolyte membrane. Electrons are extracted from the fuel electrode to an external circuit, and migrate to the air electrode via the external circuit. In the air electrode, as shown in Formula 2, the oxidant gas reacts with the protons and electrons, which have migrated from the fuel electrode, to produce water. Thus, an electrical current is generated due to electrons passing through the external circuit.

In order to improve the output of polymer electrolyte fuel cells, it is important to improve gas diffusion in the membrane electrode assemblies or improve drainage of water produced during power generation. For example, in PTL 1, gas diffusion in the electrocatalyst layers is improved by having the electrocatalyst layers contain carbon particles with different sizes. Also, in PTL 2, gas diffusion and drainage in the electrocatalyst layers are improved by controlling the percentage or length of the carbon fibers contained in these layers. Furthermore, in PTL 3, drainage in the gas diffusion layer is improved by controlling the size of carbon powder contained in the gas diffusion layer.

### [Citation List]

### [Patent Literatures]

PTL 1: JP H10-241703 A
PTL 2: JP 5537178 B
PTL 3: WO 2017/170355

### [Summary of the Invention]

### [Technical Problem]

In addition to output improvement, polymer electrolyte fuel cells are desired to be driven in various environments such as low- and high-humidity environments. In order to fulfill these requirements, it is important to appropriately maintain water content in the membrane electrode assembly so that the assembly will not be excessively dry, while enhancing drainage therein. In particular, moisture conditions, such as production or non-production of water due to power generation, are different between the fuel electrode and the air electrode, and therefore, membrane electrode assemblies are required to be improved considering the differences between these types of electrode.

### [Solution to Problem]

A membrane electrode assembly for solving the above issues includes: a polymer electrolyte membrane; a first electrocatalyst layer and a second electrocatalyst layer sandwiching the polymer electrolyte membrane while being in contact therewith; a fuel electrode diffusion layer which is a gas diffusion layer laminated on the first electrocatalyst layer to form a fuel electrode; and an air electrode diffusion layer which is a gas diffusion layer laminated on the second electrocatalyst layer to form an air electrode, wherein the air electrode diffusion layer has a Gurley value of 80 seconds or less in a thickness direction thereof, which is smaller than a Gurley value of the fuel electrode diffusion layer in a thickness direction thereof, the Gurley value indicating air permeability.

With the above configuration, drainage of the produced water is accelerated in the air electrode to suppress the occurrence of flooding, while water is less likely to escape from the fuel electrode compared to the air electrode to suppress drying. Accordingly, balance of water content in the membrane electrode assembly is appropriately maintained, and good power generation performance can be achieved in both of low- and high-humidity environments.

A polymer electrolyte fuel cell for solving the above issues includes: the above membrane electrode assembly; and a pair of separators sandwiching the membrane electrode assembly.

With the above configuration, good power generation performance can be achieved in various environments with different humidification conditions.

### [Advantageous Effects of the Invention]

According to the present disclosure, good power generation performance can be achieved in various environments with different humidification conditions.

### [Brief Description of the Drawings]

Fig. 1 is a diagram illustrating a cross-sectional structure of a membrane electrode assembly according to an embodiment of a membrane electrode assembly.
Fig. 2 is a schematic diagram illustrating an electrocatalyst layer of according to an embodiment.
Fig. 3 is a perspective exploded view illustrating a structure of a polymer electrolyte fuel cell according to an embodiment.

### [Description of the Embodiments]

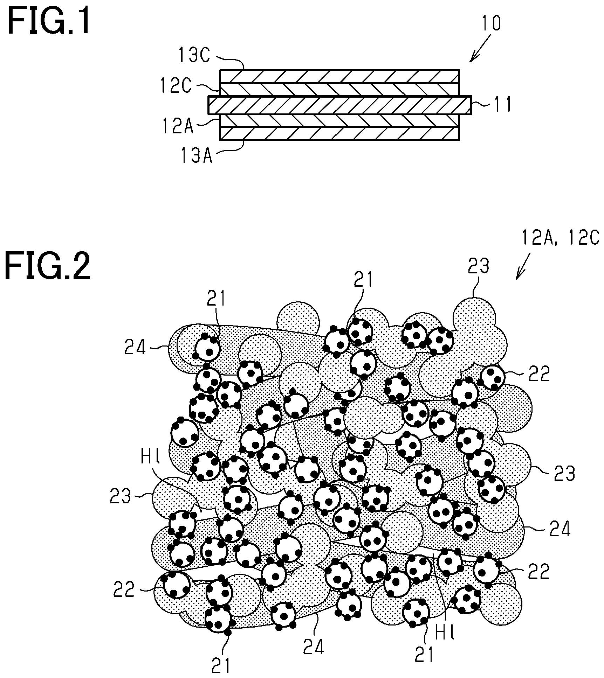

Referring to Figs. 1 to 3, an embodiment of a membrane electrode assembly and a polymer electrolyte fuel cell will be described. In the present specification, the expression "at least one of A and B" should be construed as "only A, or only B, or both of A and B."

### [Membrane electrode assembly]

Referring to Figs. 1 and 2, a configuration of the membrane electrode assembly will be described.

Fig. 1 shows a membrane electrode assembly 10 including a polymer electrolyte membrane 11, a pair of electrocatalyst layers, and a pair of gas diffusion layers. The pair of electrocatalyst layers corresponds to a fuel electrode catalyst layer 12A (first electrocatalyst layer) and an air electrode catalyst layer 12C (second electrocatalyst layer). The pair of gas diffusion layers corresponds to a fuel electrode diffusion layer 13A and an air electrode diffusion layer 13C.

The polymer electrolyte membrane 11 is sandwiched between the fuel electrode catalyst layer 12A and the air electrode catalyst layer 12C. The fuel electrode catalyst layer 12A is in contact with one of the two surfaces of the polymer electrolyte membrane 11, and the air electrode catalyst layer 12C is in contact with the other of the two surfaces of the polymer electrolyte membrane 11.

The fuel electrode diffusion layer 13A is laminated on the fuel electrode catalyst layer 12A, while the air electrode diffusion layer 13C is laminated on the air electrode catalyst layer 12C. In other words, a laminate of the polymer electrode membrane 11, the fuel electrode catalyst layer 12A, and the air electrode catalyst layer 12C is sandwiched between the fuel electrode diffusion layer 13A and the air electrode diffusion layer 13C.

The fuel electrode catalyst layer 12A and the fuel electrode diffusion layer 13A form a fuel electrode serving as an anode of the polymer electrolyte fuel cell. The air electrode catalyst layer 12C and the air electrode diffusion layer 13C form an air electrode serving as a cathode of the polymer electrolyte fuel cell.

As viewed from a position perpendicular to one surface of the polymer electrode membrane 11, the fuel electrode catalyst layer 12A, the air electrode catalyst layer 12C, the fuel electrode diffusion layer 13A, and the air electrode diffusion layer 13C have profiles substantially identical to each other. The polymer electrode membrane 11 has a profile larger than those of the electrode layers 12A, 12C and the diffusion layers 13A, 13C. The profile of the polymer electrolyte membrane 11 and the profiles of the catalyst layers 12A, 12C and the diffusion layers 13A, 13C are not particularly limited, but may for example be rectangular.

The polymer electrolyte membrane 11 includes a polymer electrolyte. Polymer electrolytes used for the polymer electrolyte membrane 11 may be polymer electrolytes having proton conductivity, e.g., fluoropolymer electrolytes or hydrocarbon polymer electrolytes. Examples of the fluoropolymer electrolytes include Nafion (registered trademark) manufactured by Du Pont, Flemion (registered trademark) manufactured by Asahi Glass Co., Ltd, Aciplex (registered trademark) manufactured by Asahi Kasei Corporation, and Aquivion (registered trademark) manufactured by Solvay Specialty Polymers. Examples of the hydrocarbon polymer electrolytes include sulfonated polyether ketones, sulfonated polyether sulfones, sulfonated polyether ether sulfones, sulfonated polysulfides, sulfonated polyphenylenes, sulfonated polyimides, and acid-doped polybenzoxazoles.

Fig. 2 is a schematic diagram illustrating a configuration of the electrocatalyst layer according to the present embodiment. As shown in Fig. 2, the fuel electrode catalyst layer 12A and the air electrode catalyst layer 12C each contain a catalytic material 21, carbon particles 22, and polymer electrolyte aggregates 23. The fuel electrode catalyst layer 12A and the air electrode catalyst layer 12C may each contain a fibrous material 24. In the catalyst layers 12A, 12C, the aggregates 23 or the fibrous material 24 are present around the dispersed carbon particles 22, and voids HI are formed between these components.

Examples of the catalytic material 21 include: platinum group elements such as platinum, palladium, ruthenium, iridium, rhodium, and osmium; metals such as iron, lead, copper, chromium, cobalt, nickel, manganese, vanadium, molybdenum, gallium, and aluminum; and alloys, oxides, or composite oxides thereof. In particular, the catalytic material 21 is preferred to be platinum or a platinum alloy. The catalytic material 21 is preferred to have an average particle size of 0.5 nm or more and 20 nm or less, and more preferably 1 nm or more and 5 nm or less. If the average particle size of the catalytic material 21 is equal to or larger than the above lower limit, stability as a catalyst can be enhanced, and if it is equal to or smaller than the above upper limit, activity as a catalyst can be enhanced.

The carbon particles 22 may only need to be electrically conductive fine particulate carriers, which are not affected by the catalyst. Carbon materials used for the carbon particles 22 may be, for example, carbon powders such as carbon black, graphite, activated carbon, carbon nanotubes, and fullerene. The carbon particles 22 are preferred to have an average particle size of 10 nm or more and 1,000 nm or less, and more preferably 10 nm or more and 100 nm or less. If the average particle size of the carbon particles 22 is equal to or greater than the above lower limit, electron conductive paths may be easily formed in the catalyst layers 12A, 12C, and if it is equal to or smaller than the above upper limit, the catalyst layers 12A, 12C can be formed with a small thickness that will not excessively increase resistance, thereby suppressing output reduction of the fuel cell.

The catalytic material 21 is preferred to be supported by the carbon particles 22. If the carbon material that supports the catalytic material 21 is in the form of particles, the carbon material can have an increased area for supporting the catalytic material 21, and thus the catalytic material 21 can be supported on the carbon material at a high density. Accordingly, the catalytic activity can be improved.

The polymer electrolyte aggregates 23 are each a mass of polymer electrolyte that is an ionomer aggregated by a cohesive force. The cohesive force includes Coulomb force and van der Waals force acting within an ionomer.

Polymer electrolytes contained in the aggregates 23 may be polymer electrolytes having proton conductivity, e.g., fluoropolymer electrolytes or hydrocarbon polymer electrolytes. Examples of the fluoropolymer electrolytes include Nafion (registered trademark) manufactured by Du Pont, Flemion (registered trademark) manufactured by Asahi Glass Co., Ltd, Aciplex (registered trademark) manufactured by Asahi Kasei Corporation, and Aquivion (registered trademark) manufactured by Solvay Specialty Polymers. Examples of the hydrocarbon polymer electrolytes include sulfonated polyether ketones, sulfonated polyether sulfones, sulfonated polyether ether sulfones, sulfonated polysulfides, sulfonated polyphenylenes, sulfonated polyimides, and acid-doped polybenzoxazoles.

If the polymer electrolyte contained in the aggregates 23 and the polymer electrolyte contained in the polymer electrolyte membrane 11 are of the same type, adhesion of the catalyst layers 12A, 12C to the polymer electrolyte membrane 11 can be enhanced.

The fibrous material 24 includes electron-conducting fibers or proton-conducting fibers. If the catalyst layers 12A, 12C contain the fibrous material 24, the strength of these layers 12A, 12C can be enhanced, formation of these layers 12A, 12C can be facilitated, or cracking may be less likely to occur in these layers 12A, 12C. Also, durability of the membrane electrode assembly 10 or power generation performance of the fuel cell can be improved.

The electron-conducting fibers may be, for example, carbon fibers. Carbon fibers have a fibrous structure whose constituent element is carbon. The carbon material used as carbon fibers may be, for example, a fibrous carbon material, such as carbon fibers, carbon nanofibers, and carbon nanotubes. In particular, carbon nanofibers or carbon nanotubes are preferred to be used.

The proton-conducting fibers are fibers obtained by processing a polymer electrolyte having proton conductivity into a fibrous form. Polymer electrolytes contained in the proton-conducting fibers may be, for example, fluoropolymer electrolytes or hydrocarbon polymer electrolytes. Examples of the fluoropolymer electrolytes include Nafion (registered trademark) manufactured by Du Pont, Flemion (registered trademark) manufactured by Asahi Glass Co., Ltd, Aciplex (registered trademark) manufactured by Asahi Kasei Corporation, and Aquivion (registered trademark) manufactured by Solvay Specialty Polymers. Examples of the hydrocarbon polymer electrolyte include sulfonated polyether ketones, sulfonated polyether sulfones, sulfonated polyether ether sulfones, sulfonated polysulfides, sulfonated polyphenylenes, sulfonated polyimides, and acid-doped polybenzoxazoles.

If the polymer electrolytes contained in the polymer electrolyte membrane 11, the aggregates 23, and the proton-conducting fibers are of the same type, adhesion of the catalyst layers 12A, 12C to the polymer electrolyte membrane 11 can be enhanced.

The fibrous material 24 contained in the catalyst layers 12A, 12C may be only electron-conducting fibers, or may be only proton-conducting fibers. Alternatively, the fibrous material 24 contained in the catalyst layers 12A, 12C may contain both of electron-conducting fibers and proton-conducting fibers. Alternatively, the catalyst layers 12A, 12C do not necessarily have to contain the fibrous material 24.

The fibrous material 24 is preferred to have an average fiber diameter of 0.5 nm or more and 500 nm or less, and more preferably 10 nm or more and 300 nm or less. If the average fiber diameter is in the above range, the voids HI can be properly formed in the catalyst layers 12A, 12C, and accordingly, the output of the fuel cell can be improved.

The fibrous material 24 is preferred to have an average fiber length of 1 µm or more and 200 µm or less, and more preferably 1 µm or more and 50 µm or less. If the average fiber length is in the above range, the strength of the catalyst layers 12A, 12C can be properly enhanced, and accordingly, the occurrence of cracking can be suppressed when forming the catalyst layers 12A, 12C. In addition, the properly formed voids HI of the catalyst layers 12A, 12C can improve the output of the fuel cell.

If the catalyst layers 12A, 12C contain carbon fibers, the catalytic material 21 may be supported by the carbon fibers. Alternatively, both of the carbon fibers and the carbon particles 22 may support the catalytic material 21. However, if the carbon particles 22 support the catalytic material 21, the voids formed by the carbon fibers may serve as discharge paths for the water produced due to power generation to improve drainage in the catalyst layers 12A, 12C, and this is preferred.

The catalyst layers 12A, 12C is preferred to have a thickness of 30 µm or less, and more preferably 10 µm or less. If the thickness of the catalyst layers 12A, 12C is in the above range, increase in resistance of the catalyst layers 12A, 12C can be suppressed, and therefore, power generation performance of the fuel cell can be prevented from being deteriorated. Furthermore, due to the catalyst layers 12A, 12C not being excessively thick, cracking may be less likely to occur.

The thickness of the catalyst layers 12A, 12C is preferred to be 5 µm or more. If the thickness of the catalyst layers 12A, 12C is 5 µm or more, thickness variation may be less likely to occur in these layers 12A, 12C, and therefore, the catalytic material 21 or the polymer electrolyte may be prevented from being unevenly distributed in these layers 12A, 12C. Furthermore, the content of water produced in the catalyst layers 12A, 12C due to power generation may be prevented from increasing, and therefore, deterioration in power generation performance of the fuel cell can be suppressed.

By suppressing the occurrence of cracking on the surfaces of the catalyst layers 12A, 12C or suppressing the uneven thickness thereof, durability of the membrane electrode assembly 10 can be enhanced during long-term use of the fuel cell.

The diffusion layers 13A, 13C are gas permeable layered bodies. The diffusion layers 13A, 13C are preferred to include respective carbon substrates. The carbon substrates may be, for example, carbon paper, carbon cloth, and carbon felt. In order to improve drainage, the carbon substrates are preferred to be subjected to water-repelling treatment.

In addition to the carbon substrates, the diffusion layers 13A, 13C are preferred to include respective microporous layers which are formed of a porous material. Examples of the material of the microporous layers include mixtures obtained by mixing fluororesins such as polytetrafluoroethylene (PTFE), perfluoroethylene-propene copolymers (FEP), tetrafluoroethylene-ethylene copolymer resins (ETFE), with carbon materials such as carbon black particles, carbon fibers, and graphite.

The diffusion layers 13A, 13C are preferred to have a thickness of 5 µm or more and 500 µm or less. If the thickness of the diffusion layers 13A, 13C is 5 µm or more, gas diffusion and drainage in the diffusion layers 13A, 13C may be improved. If the thickness of the diffusion layers 13A, 13C are 500 µm or less, increase of electrical resistance in the diffusion layers 13A, 13C can be suppressed.

The Gurley value indicating air permeability in the thickness direction of the air electrode diffusion layer 13C is 80 seconds or less and smaller than the Gurley value of the furl electrode diffusion layer 13A. The Gurley value refers to time required for a specified volume of air to permeate through a material having a specified area at a specified pressure difference, i.e., a parameter expressed by time per 100 mL, and is measured according to the measurement method stipulated in JIS P 8117:2009.

Since water is produced in the air electrode due to power generation, water content tends to be excessive therein, while the fuel electrode tends to be drier compared to the air electrode. If air permeability of the air electrode diffusion layer 13C is higher than that of the fuel electrode diffusion layer 13A, drainage of the produced water can be accelerated in the air electrode to suppress the occurrence of flooding, while water may be less likely to escape from the fuel electrode compared to the air electrode to suppress excessive drying. Accordingly, the balance of water content in the membrane electrode assembly 10 is appropriately maintained, and the fuel cell can achieve sufficient output in both of low- and high-humidity environments.

From the perspective of enhancing this effect, the difference in Gurley value is preferred to be 10 seconds or more between the air electrode diffusion layer 13C and the fuel electrode diffusion layer 13A. If the difference in the Gurley value is 40 seconds or less between the air electrode diffusion layer 13C and the fuel electrode diffusion layer 13A, the difference in gas diffusion between these layers can be suppressed to an extent that the progress of electrode reaction is not affected.

If the Gurley value of the air electrode diffusion layer 13C is 80 seconds or less, sufficient gas diffusion and drainage can be achieved in the air electrode diffusion layer 13C. The Gurley value indicating air permeability in the thickness direction of the fuel electrode diffusion layer 13A is not particularly limited but is preferred to be 100 seconds or less. If the Gurley value of the fuel electrode diffusion layer 13A is 100 seconds or less, gas diffusion can be appropriately achieved in this layer 13A, while drying can be suppressed in the fuel electrode as described above.

It should be noted that the Gurley values of the diffusion layers 13A, 13C are controlled according to the materials of these layers 13A, 13C, the ratios of voids contained in these layers 13A, 13C, and the like.

### [Polymer Electrolyte Fuel Cell]

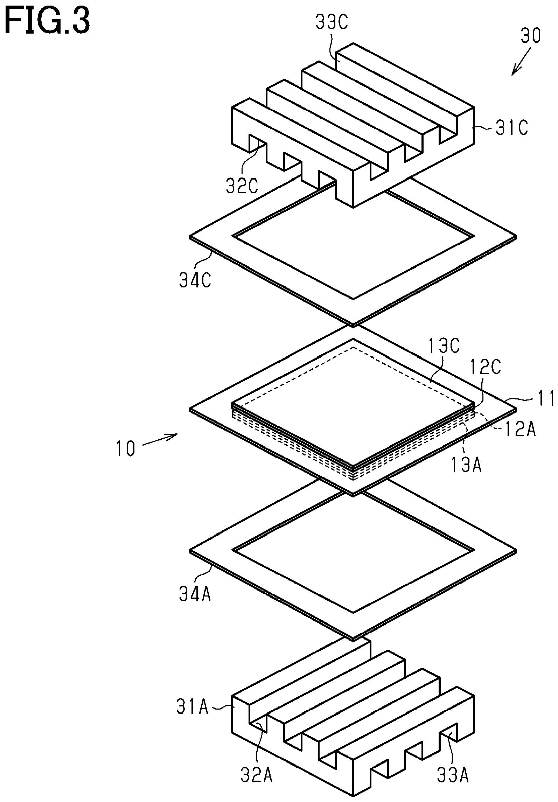

Referring to Fig. 3, a configuration of a polymer electrolyte fuel cell including the membrane electrode assembly 10 described above will be described.

Fig. 3 shows a polymer electrolyte fuel cell 30 including the membrane electrode assembly 10 and a pair of separators 31A, 31C. The polymer electrolyte fuel cell 30 may further include a pair of gaskets 34A, 34C.

The membrane electrode assembly 10 is sandwiched between the separators 31A, 31C. The separators 31A, 31C are made of an electrically conductive material impermeable to gas. The separator 31A faces the fuel electrode diffusion layer 13A, and the separator 31C faces the air electrode diffusion layer 13C. The separator 31A has a surface facing the fuel electrode diffusion layer 13A and provided with gas channels 32A, and a surface facing away from the fuel electrode diffusion layer 13A and provided with cooling water channels 33A. Similarly, the separator 31C has a surface facing the air electrode diffusion layer 13C and provided with gas channels 32C, and a surface facing away from the air electrode diffusion layer 13C and provided with cooling water channels 33C.

The gasket 34A, which is located between the polymer electrolyte membrane 11 and the separator 31A, surrounds the fuel electrode catalyst layer 12A and the fuel electrode diffusion layer 13A. The gasket 34C, which is located between the polymer electrolyte membrane 11 and the separator 31C, surrounds the air electrode catalyst layer 12C and the air electrode diffusion layer 13C. The gaskets 34A, 34C suppress leakage of the gas supplied to the catalyst layers 12A, 12C and the diffusion layers 13A, 13C to the outside of the polymer electrolyte fuel cell 30. The gaskets 34A, 34C may the components of the membrane electrode assembly 10.

When using the polymer electrolyte fuel cell 30, a fuel gas such as hydrogen is passed through the gas channels 32A of the separator 31A, and an oxidant gas such as oxygen is passed through the gas channels 32C of the separator 31C. Cooling water is passed through the cooling water channels 33A, 33C of the separators 31A, 31C. The fuel gas is supplied from the gas channels 32A to the fuel electrode, and the oxidant gas is supplied from the gas channels 32C to the air electrode, causing the electrode reaction to progress and generating an electromotive force between the fuel electrode and the air electrode. An organic fuel such as methanol may be supplied to the fuel electrode.

The polymer electrolyte fuel cell 30 may be used as a single cell as shown in Fig. 3, or may be used as a single fuel cell in which a plurality of polymer electrolyte fuel cells 30 are laminated and connected in series.

### [Method of producing membrane electrode assembly]

A method of producing a membrane electrode assembly 10 will be described.

The catalyst layers 12A, 12C are formed by applying a catalyst layer slurry containing materials of the catalyst layers 12A, 12C onto respective substrates to form coating films, and drying the coating films.

The solvent for the catalyst layer slurry is not particularly limited. Examples of the solvent include: water; alcohols such as methanol, ethanol, 1-propanol, 2-propanol, 1-butanol, 2-butanol, isobutyl alcohol, and tert-butyl alcohol; ketones such as acetone, methyl ethyl ketone, methyl propyl ketone, methyl butyl ketone, methyl isobutyl ketone, methyl amyl ketone, pentanone, heptanone, cyclohexanone, methyl cyclohexanone, acetonylacetone, diethyl ketone, dipropyl ketone, and diisobutyl ketone; ethers such as tetrahydrofuran, tetrahydropyran, dioxane, diethylene glycol dimethyl ether, anisole, methoxy toluene, diethyl ether, dipropyl ether, and dibutyl ether; amines such as isopropylamine, butylamine, isobutylamine, cyclohexylamine, diethylamine, and aniline; esters such as propyl formate, isobutyl formate, amyl formate, methyl acetate, ethyl acetate, propyl acetate, butyl acetate, isobutyl acetate, pentyl acetate, isopentyl acetate, methyl propionate, ethyl propionate, and butyl propionate; acetic acid; propionic acid; dimethylformamide; dimethylacetamide; and N-methylpyrrolidone. Examples of glycols or glycol ether solvents include ethylene glycol, diethylene glycol, propylene glycol, ethylene glycol monomethylether, ethylene glycol dimethylether, ethylene glycol diethylether, diacetone alcohol, 1-methoxy-2-propanol, and 1-ethoxy-2-propanol.

As the substrates for forming the catalyst layers 12A, 12C, transfer substrates, for example, are used for separation after transfer of the catalyst layers 12A, 12C to the polymer electrolyte membrane 11. For example, the transfer substrates may be resin films. Alternatively, the polymer electrolyte membrane 11, or the gas diffusion layers 13A and 13C may be used as substrates for forming the catalyst layers 12A and 12C.

The method of applying the catalyst layer slurry to the substrates is not particularly limited. Examples of the coating method include doctor blading, die coating, dipping, screen printing, laminator roll coating, and spraying.

For example, the method of drying the catalyst layer slurry applied to the substrates may be hot air drying or infrared drying. The drying temperature is preferred to be about 40°C or more and 200°C or less, and more preferred to be about 40°C or more and 120°C or less. The drying time is preferred to be about 0.5 minutes or more and 1 hour or less, and more preferred to be about 1 minute or more and 30 minutes or less.

If the substrates for forming the catalyst layers 12A, 12C are transfer substrates, the transfer substrates may be separated from the catalyst layers 12A, 12C after bonding the catalyst layers 12A, 12C to the polymer electrolyte membrane 11 using thermocompression bonding. Then, the diffusion layers 13A, 13C are pressure-bonded to the respective catalyst layers 12A, 12C on the polymer electrolyte membrane 11. Thus, a membrane electrode assembly 10 is formed.

If the substrates for forming the catalyst layers 12A, 12C are the diffusion layers 13A, 13C, the catalyst layers 12A, 12C supported by the respective diffusion layers 13A, 13C are bonded to the polymer electrolyte membrane 11 using thermocompression bonding to form a membrane electrode assembly 10.

If the substrates for forming the catalyst layers 12A, 12C are served by the polymer electrolyte membrane 11, the catalyst layers 12A, 12C are directly formed on the surfaces of the polymer electrolyte membrane 11, followed by pressure-bonding the diffusion layers 13A, 13C to the respective catalyst layers 12A, 12C. Thus, a membrane electrode assembly 10 is formed.

According to the production method using the polymer electrolyte membrane 11 as substrates for forming the catalyst layers 12A and 12C, high adhesion can be achieved between the polymer electrolyte membrane 11 and the catalyst layers 12A, 12C. Since no pressure is required to be applied for bonding the catalyst layers 12A, 12C, these layers 12A, 12C are prevented from being crushed. However, since the polymer electrolyte membrane 11 has characteristics of greatly swelling and shrinking, using the polymer electrolyte membrane 11 as substrates causes a great change in the substrate volume in the step of drying the coating films that serve as the catalyst layers 12A and 12C, compared to the case of using the transfer substrates or the diffusion layers 13A and 13C as substrates. In this regard, if the catalyst layers 12A, 12C contain the fibrous material 24, the occurrence of cracking can be suppressed, and accordingly, the catalyst layers 12A, 12C can be appropriately formed even when the polymer electrolyte membrane 11 is used as substrates.

The polymer electrolyte fuel cell 30 is produced by assembling the separators 31A, 31C to the membrane electrode assembly 10, and providing a gas supply mechanism and the like thereto.

### [Examples]

The membrane electrode assembly and the polymer electrolyte fuel cell described above will be explained using specific examples and comparative examples.

### (Example 1)

20 g of platinum supported carbon (TEC10E50E manufactured by Tanaka Kikinzoku Kogyo K.K), as carbon particles supporting a catalytic material, was added to water and mixed, and then a polymer electrolyte dispersion (Nafion dispersion manufactured by Wako Pure Chemical Industries, Ltd.) and 1-propanol were added to the mixture and stirred to prepare a catalyst layer slurry.

The catalyst layer slurry was applied to polyethylene terephthalate substrates and the coating films were dried to form two electrocatalyst layers. Then, the electrocatalyst layers were transferred to a polymer electrolyte membrane (Nafion 212 manufactured by Du Pont) from the polyethylene terephthalate substrates to place the electrocatalyst layers to both respective surfaces of the polymer electrode membrane. For the transfer, the polymer electrolyte membrane and the electrocatalyst layers were bonded together at 120°C using thermocompression bonding.

Gas diffusion layers having different air permeability were laminated on the two respective electrocatalyst layers to obtain a membrane electrode assembly of Example 1. The gas diffusion layers were each a laminate of a carbon substrate and a microporous layer. The gas diffusion layer of the fuel electrode had a Gurley value of 68 seconds, while the gas diffusion layer of the air electrode had a Gurley value of 47 seconds.

### (Example 2)

A membrane electrode assembly of Example 2 was obtained using the same material and processing as in Example 1 except that the gas diffusion layers were changed. In Example 2, the gas diffusion layer of the fuel electrode had a Gurley value of 90 seconds, while the gas diffusion layer of the air electrode had a Gurley value of 75 seconds.

### (Example 3)

A membrane electrode assembly of Example 3 was obtained using the same material and processing as in Example 1 except that the gas diffusion layers were changed. In Example 3, the gas diffusion layer of the fuel electrode had a Gurley value of 61 seconds, while the gas diffusion layer of the air electrode had a Gurley value of 50 seconds.

### (Example 4)

A membrane electrode assembly of Example 4 was obtained using the same material and processing as in Example 1 except that the gas diffusion layers were changed. In Example 4, the gas diffusion layer of the fuel electrode had a Gurley value of 41 seconds, while the gas diffusion layer of the air electrode had a Gurley value of 5 seconds.

### (Example 5)

A membrane electrode assembly of Example 5 was obtained using the same material and processing as in Example 1 except that 10 g of carbon fibers were added to the catalyst layer slurry. Carbon nanofibers (VGCF manufactured by Showa Denko K.K) were used as the carbon fibers. The carbon fibers had an average fiber diameter of 150 nm, and an average fiber length of 10 µm.

### (Comparative Example 1)

A membrane electrode assembly of Comparative Example 1 was obtained using the same material and processing as in Example 1 except that the gas diffusion layers were changed. In Comparative Example 1, the gas diffusion layer of the fuel electrode had a Gurley value of 90 seconds, while the gas diffusion layer of the air electrode had a Gurley value of 85 seconds.

### (Comparative Example 2)

A membrane electrode assembly of Comparative Example 2 was obtained using the same material and processing as in Example 1 except that the gas diffusion layers were changed. In Comparative Example 2, the Gurley value was 75 seconds in the gas diffusion layers of both the fuel electrode and the air electrode.

### (Comparative Example 3)

A membrane electrode assembly of Comparative Example 3 was obtained using the same material and processing as in Example 1 except that the gas diffusion layers were changed. In Comparative Example 3, the gas diffusion layer of the fuel electrode had a Gurley value of 50 seconds, while the gas diffusion layer of the air electrode had a Gurley value of 61 seconds.

### <Evaluation>

According to "Cell unit evaluation and analysis protocol", a booklet published by the New Energy and Industrial Technology Development Organization (NEDO), gaskets and separators were disposed on both respective surfaces of a membrane electrode assembly and tightened so that a predetermined pressure was applied to them to obtain a JARI standard cell for use as an evaluation single cell. Then, I-V measurement was performed according to the method described in the booklet "Cell unit evaluation and analysis protocol". In this case, the I-V measurement was performed by setting humidification conditions to Condition 1, Condition 2, and Condition 3. Condition 2 corresponds to standard conditions. Condition 1 corresponds to low-humidity conditions, with the relative humidity of the air electrode changed from that of the standard conditions to RH 30%. Condition 3 corresponds to high-humidity conditions, with the relative humidity of both the fuel and air electrodes changed from that of the standard conditions to RH 100%.

### <Evaluation results>

Table 1 shows evaluation results for the examples and comparative examples in terms of Gurley values of the gas diffusion layers, and power generation performance under the individual conditions. For power generation performance with the current density of 1.0 A/cm², a voltage of 0.65 V or more is indicated as Excellent, a voltage of 0.60 V or more and less than 0.65 V is indicated as Good, and a voltage of less than 0.60 V is indicated as Poor.

**[Table 1]**

| | Gurley value | | Power generation performance | | |
|---|---|---|---|---|---|
| | Fuel electrode | Air electrode | Condition 1 | Condition 2 | Condition 3 |
| Ex. 1 | 68 | 47 | Good | Excellent | Good |
| Ex. 2 | 90 | 75 | Excellent | Good | Good |
| Ex. 3 | 61 | 50 | Good | Good | Good |
| Ex. 4 | 41 | 5 | Good | Good | Excellent |
| Ex. 5 | 68 | 47 | Good | Excellent | Excellent |
| Comp. Ex. 1 | 90 | 85 | Good | Good | Poor |
| Comp. Ex. 2 | 75 | 75 | Excellent | Good | Poor |
| Comp. Ex. 3 | 50 | 61 | Good | Poor | Poor |

As shown in Table 1, Examples 1 to 5, in which the Gurley value of the gas diffusion layer of the air electrode was 80 seconds or less and was smaller than that of the fuel electrode, achieved sufficient power generation performance in all of the low-, standard, and high-humidity conditions. Comparison between Examples 1 and 5 implies that output can be improved in particular in the high-humidity conditions if the electrocatalyst layers contain a fibrous material.

However, Comparative Example 1, in which the Gurley value of the gas diffusion layer of the air electrode was smaller than that of the gas diffusion layer of the fuel electrode but exceeded 80 seconds, could not achieve sufficient power generation performance in the high-humidity conditions. This is thought to be because, due to the insufficient air permeability in the gas diffusion layer of the air electrode, the higher the humidity, the more insufficient the drainage became in the air electrode, and this resultantly brought about output reduction in the high-humidity conditions.

Comparative Example 2, in which the Gurley value was the same between the diffusion layers of the air and fuel electrodes, could not achieve sufficient power generation performance in the high-humidity conditions, and Comparative Example 3, in which the Gurley value was smaller in the gas diffusion layer of the fuel electrode than in the gas diffusion layer of the air electrode, could not achieve sufficient power generation performance not only in the high-humidity conditions but also in the standard conditions. These problems are thought to be due to the insufficient air permeability in the gas diffusion layer of the air electrode with respect to the air permeability in the gas diffusion layer of the fuel electrode, water content in the membrane electrode assembly lost balance, and resultantly, output reduction was brought about.

As described above using the examples, according to the membrane electrode assembly and the polymer electrolyte fuel cell of the above embodiment, the following effects can be achieved.
(1) The Gurley value of the air electrode diffusion layer 13C is 80 seconds or less and is smaller than the Gurley value of the furl electrode diffusion layer 13A. With this configuration, drainage of the produced water is accelerated in the air electrode to suppress the occurrence of flooding, while water is less likely to escape from the fuel electrode compared to the air electrode, thereby suppressing drying. Accordingly, balance of water content in the membrane electrode assembly 10 is appropriately maintained, and good power generation performance can be achieved in both of low- and high-humidity environments.
(2) Since the strength of the catalyst layers 12A, 12C is enhanced due to their containing the fibrous material 24, cracking is less likely to occur in these layers. Furthermore, durability of the membrane electrode assembly 10 or power generation performance of the fuel cell can be improved.
(3) Due to the catalyst layers 12A, 12C containing proton-conducting polymer electrolyte fibers, proton conductivity can be enhanced in these layers. Furthermore, due to the catalyst layers 12A, 12C containing carbon fibers, electron conductivity can be enhanced in these layers. If the carbon material forming the carbon fibers is at least either of carbon nanotubes and carbon nanofibers, electron conductivity can be appropriately enhanced in the catalyst layers 12A, 12C.

## Claims

1. A membrane electrode assembly comprising
a polymer electrolyte membrane;
a first electrocatalyst layer and a second electrocatalyst layer sandwiching the polymer electrolyte membrane while being in contact therewith;
a fuel electrode diffusion layer which is a gas diffusion layer laminated on the first electrocatalyst layer to form a fuel electrode; and
an air electrode diffusion layer which is a gas diffusion layer laminated on the second electrocatalyst layer to form an air electrode, wherein
the air electrode diffusion layer has a Gurley value of 80 seconds or less in a thickness direction thereof, which is smaller than a Gurley value of the fuel electrode diffusion layer in a thickness direction thereof, the Gurley value indicating air permeability.

2. The membrane electrode assembly according to claim 1, wherein
the first electrocatalyst layer and the second electrocatalyst layer each contain a catalytic material, carbon particles, polymer electrolyte aggregates, and a fibrous material.

3. The membrane electrode assembly according to claim 2, wherein
the fibrous material contained in each of the electrocatalyst layers comprises at least either of electron-conducting fibers and proton-conducting fibers.

4. The membrane electrode assembly according to claim 2 or 3, wherein
the first electrocatalyst layer and the second electrocatalyst layer each comprise carbon fibers corresponding to the fibrous material; and
the carbon fibers contained in each of the electrocatalyst layers comprise at least either of carbon nanotubes and carbon nanofibers.

5. A polymer electrolyte fuel cell, comprising
the membrane electrode assembly according to any one of claims 1 to 4; and
a pair of separators sandwiching the membrane electrode assembly.
